# EUROPEAN PATENT APPLICATION

(11) **EP 2 068 541 A1**
(43) Date of publication of application: **10.06.2009**
(21) Application number: 07122303.6
(22) Date of filing: 04.12.2007
(51) Int. Cl.: H04M 3/42

(54) **Telecommunication presence system with indication that the subscriber is driving a motor vehicle**

(71) Applicant: Nederlandse Organisatie voor toegepast-natuurwetenschappelijk onderzoek TNO, 2628 VK Delft (NL)
(72) Inventor: The designation of the inventor has not yet been filed
(74) Representative: Hatzmann, Martin

(57) **Abstract**

Telecommunication system providing presence information, comprising a network (3), a first mobile terminal (1) and a second mobile terminal (2), comprising assessment means arranged for assessing to what extend the second terminal or its user (5) would be able and/or prepared to be called, and for outputting assessment data representing that ability to be called, as well as storage means (6) for storage those assessment data. The first mobile terminal is arranged to receive and to display, the representation of the second terminals assessment data retrieved from said storage means, in order to support the first mobile terminal's user (4) to decide to call or not to call the second terminal in view of the ability/readiness of the second terminal and/or its user to be called. The assessment means may comprise detection means for detecting the locomotion or travelling mode and/or speed of the second terminal, e.g. arranged to cooperate with any public positioning system like GPS, GSM etc. The assessment means may comprise detection means for detecting whether the second terminal's user is involved in driving any motor vehicle, e.g. arranged to cooperate with a control or management system of the motor vehicle, and being arranged for detecting whether the user has set the second terminal to handsfree or to not-handsfree operation.

## Description

The invention refers to a telecommunication system, comprising a network, a first mobile terminal and a second mobile terminal and addresses the following problem.

Telephone calling while driving a vehicle may cause accidents due to the fact that the driver's attention is easily distracted from the traffic. This applies both for handsfree and for non-handsfree calling, although handsfree calling may be less dangerous.

It is an object of the present invention to provide enhanced safety for vehicle drivers using a cellular telephone without requiring special vehicle mounted hardware;

This problem has already been the subject of several patent applications. For example, US7181229 discloses a system for disabling a cell phone in the presence of certain conditions, and for switching it off in the presence of some other conditions, while allowing its use in the normal fashion in the absence of these two sets of conditions. Thus, this system regulates cell phone use in accordance with specified restrictions in specific locations, and allows its normal functioning when these restrictions are not required. Specifically, a first condition is an attempt to operate a cell phone by the driver of a vehicle having its ignition on and/or moving above a certain speed. In such a condition the system would automatically disable the OK switch of a cell phone and may also perform the CALL END function. In the second condition the system automatically switches off any cell phone in the ON condition being carried on the person of an individual occupying a seat in an aircraft, or a committee room, or any other such location where such a restriction is envisaged. The system also makes a provision for automatic sequential dialling of a specified set of numbers like the police, medical services etc. during an emergency by allowing overriding any regulatory restriction. In addition, this invention also relates to control circuits provided in said system for preventing tampering with or bypassing the system by cell phone users. This and all other known prior art systems use local means, installed in the vehicle, to prevent, at the vehicle's side, that the driver's attention is distracted from the traffic due to telephone conversations using a non-handsfree telephone set.

One aspect of the present invention is - different from the prior art, in which actions are taken at the side of the (potentially) called party - to enable that (potential) callers are informed (warned) that the (potentially) called party is more or less (un) able to receive a telephone call, e.g. because of driving a motor vehicle.

According to the invention a telecommunication system is proposed, comprising a network, a first mobile terminal and a second mobile terminal, which telecommunication system preferably comprises assessment means arranged for assessing to what extend the second terminal or its user would be able and/or prepared to be called, and for outputting assessment data representing that ability to be called, as well as storage means for storage those assessment data. It is preferred that the first mobile terminal is arranged to receive and to process, e.g. to display, the representation of the second terminal's assessment data retrieved from said storage means, in order to support the first mobile terminal's user to decide to call or not to call the second terminal in view of the ability/readiness of the second terminal and/or its user to be called. For example, the value of the assessment data can be displayed in a so-called buddy list or private or public telephone directory at the first terminal's display. The assessment data may be converted into two (able/unable and/or prepared to be called) or more "security" levels, e.g. in the form of various icons, colours (e.g. green, yellow, red and/or in the form of symbols ) indicating the level of (un)ability or (un)desirability to start a call to the second terminal.

In this way a caller, the (user of the) first terminal may be notified that the (user of the) relevant second terminal is driving a motor vehicle, e.g. a car, motor bicycle, motor scooter, which may cause an inconvenience in view of traffic legislation and traffic security etc. So the caller may consider it better to await another moment for setting up a call to the second terminal's user. At the other hand, the first terminal's user may consider a situation that urgent that he/she decides to call the first terminal's user despite the fact that he/she is driving. In the latter case, the caller will - after all he/she is aware of the fact that the called person is driving - try to keep the telephone message as short and to the point as possible.

As will be elucidated further by means of an exemplary embodiment, the assessment means may comprise detection means which are arranged for detecting the locomotion or travelling mode and/or speed of the second terminal. The detection means may be part of or arranged to cooperate with any public positioning system like GPS, GSM etc.

Besides, the assessment means may comprise detection means which are arranged for detecting whether the second terminal's user is involved in driving any motor vehicle. The detection means may be part of or arranged to cooperate with a control or management system of the relevant motor vehicle. Such detection means may be arranged to communicate with the motor vehicle's control or management system via any form of near field data transmission like RFID, Bluetooth etc.

Hereinafter the invention will be elucidated further by means of an exemplary embodiment of a telecommunication system, referencing to a figure.

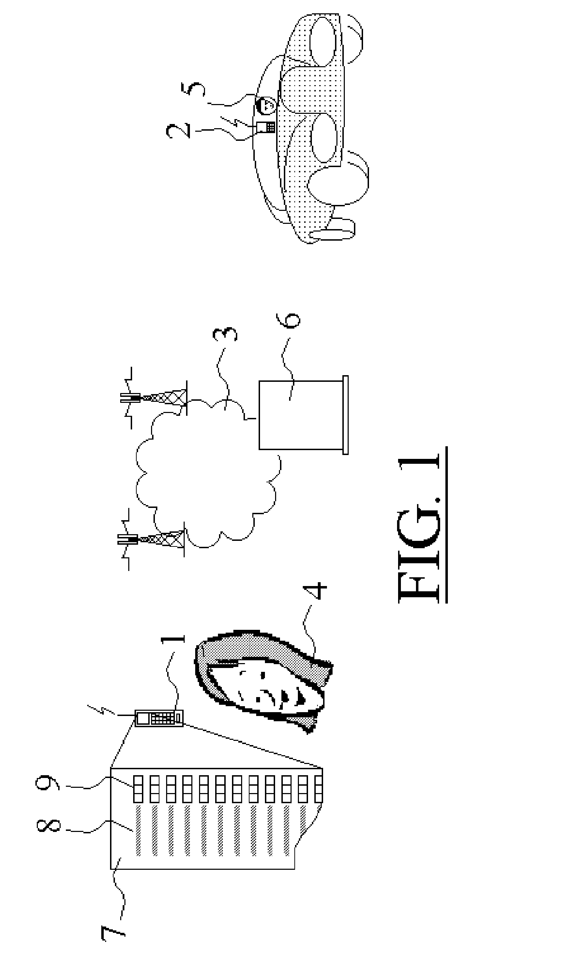

Figure 1 shows an exemplary embodiment of a configuration of the telecommunication system according to the invention.

The telecommunication system shown in figure 1 comprises a first mobile terminal 1, a second mobile terminal 2, residing in a car (either built-in or more or less independent of the car), and a network 3. The first terminal 1 can be used by a user 4, the second terminal 2 by a user 5 who is the car driver. The telecommunication system comprises assessment means, which may comprise or be supported by a server 6. The assessment means - optional embodiments of which will be discussed more in detail hereinafter - are arranged to assess to what extend the second terminal's user 5 is or is not considered to be able or prepared to be called by e.g. the first terminal's user 4, and for outputting assessment data representing that ability to be called to storage means, e.g. residing in the server 6. The first mobile terminal 1 is arranged to receive and to process, e.g. to display, the representation of the second terminal's assessment data which can be retrieved by the first terminal 1 from the storage means in server 6, in order to support the first mobile terminal's user 4 to decide to call or not to call the second terminal 2 in view of the ability/readiness or assumed readiness of the second terminal and/or its user to be called.

The assessment means may comprise detection means which are arranged for detecting the locomotion or travelling mode and/or speed of the second terminal, e.g. be part of or arranged to cooperate with any public positioning system like GPS, GSM etc. It can easily be understood that GPS and/or GSM data can be used to calculate the car's location and/or speed data. GSM data may have the advantage that they could be collected without any additional action of the second terminal 2. GPS data should be sent by terminal 2 to the server 6 to enable the server to calculate the car's location and/or speed.

Besides location and/or speed of the vehicle, by means of the vehicle's route planner (e.g. TomTom^{™}) which can be linked inside the vehicle with the user's or the vehicle's telephone terminal, it is possible to take the actual condition of the road into account, i.e. when the route planner system or any (public) traffic information system (e.g. Google Maps^{™}) e.g. indicates that the road, the vehicle is driving at, is very busy or a traffic jam is occurring, this fact can be communicated to the server 6 as part of the assessment data.

The assessment means could further comprise detection means which are arranged for detecting whether the second terminal's user is involved in driving any motor vehicle. An example is any form of near field based identification transmitter physically connected with the ignition key. When the car is in operation - and the driver is assumed not to be in the most favourable position or even legally not to be allowed to use the second terminal 2 - this can be detected by the presence of the identification transmitter.

The detection means could also be part of or arranged to cooperate with a control or management system of the relevant motor vehicle e.g. arranged to communicate with the motor vehicle's control or management system via any form of near field data transmission like RFID, Bluetooth etc. When the second terminal is part of a car kit installed in the vehicle, the detection means could be in wired connection with the vehicle's control or management system. Moreover, the detection means should be able to detect whether the driver has set his/her terminal in handsfree or in not-handsfree mode.

Reference is made to some prior art configurations which are used to disactivate communication means (e.g. a telephone terminal) at the side of a motor vehicle, thus protecting the vehicle driver against calling or being called. Information which is used in the prior art systems mentioned below is solely used at the side of the vehicle, viz. to disactivate of discourage the use of the terminal in the vehicle. According to the invention such information is used to be used to generate a status indication which can be used by the first terminal to indicate the ability/readiness status of the user of second terminal, i.e. the vehicle driver, which status may be displayed at the screen of the first terminal.

In US2006040640 GPS enabled telephone handset determines its location upon start-up and transmits that location through the cellular network to a server. If the telephone handset is within a moving vehicle (as determined by the rate of motion of the handset), an alarm may issued e.g. when the vehicle approaches a significant traffic areas.

US6690940 discloses a system for selectively disabling the use of a stand-alone electronic device under a predetermined set of conditions. The system establishes a state of the set of conditions as being satisfied or unsatisfied, communicates the state to the electronic device, and disables the selected features if the state is satisfied. In one embodiment, the system may be advantageously be used to prevent vehicular accidents by at least partially disabling non-emergency use of a wireless telephone in a moving vehicle. In another embodiment, the system may be used to disable features of an electronic device within a predetermined area having a boundary that is independent of a communications network cell.

US7064656 discloses a controller to prevent access or utilization by a vehicle operator to communications devices installed on the vehicle when the vehicle is in motion thereby reducing distractions of the operator.

The information concerning the user of the second terminal, who may drive a vehicle, - e.g. collected in a way which is known as such from e.g. one of the preceding publications, is, according to the invention, used to generate a status indication which can be used by the first terminal to indicate the ability/readiness status of the user of second terminal, i.e. the vehicle driver, which status may be displayed at the screen of the first terminal. The status information may, as figure 1 shows, be displayed as part of the "buddy list" 8, in a status indication field 9, e.g. may in the form of different icons, different colours etc. For example, the icons could indicate whether the driver has his/her terminal set in either handsfree or in not-handsfree mode, if the vehicle is located in an area of much traffic (or even a traffic jam) and/or the local weather conditions are bad (rain, snow), all such conditions being detectable by relevant detection means, possibly in collaboration with other systems, e.g. GPS, GSM, traffic information and/or route planning systems, weather information systems etc.

## Claims

1. Telecommunication system, comprising a network (3), a first mobile terminal (1) and a second mobile terminal (2),
- the telecommunication system, comprising assessment means arranged for assessing to what extend the second terminal or its user (5) would be able and/or prepared to be called, and for outputting assessment data representing that ability to be called, as well as storage means (6) for storage those assessment data;
- said first mobile terminal being arranged to receive and to process, e.g. to display, the representation of the second terminal's assessment data retrieved from said storage means, in order to support the first mobile terminal's user (4) to decide to call or not to call the second terminal in view of the ability/readiness of the second terminal and/or its user to be called.

2. Telecommunication system according to claim 1, the assessment means being arranged for detecting the locomotion or travelling mode and/or speed of the second terminal.

3. Telecommunication system according to claim 1, the assessment means being part of or arranged to cooperate with any public positioning system like GPS, GSM etc.

4. Telecommunication system according to claim 1, the assessment means being part of or arranged to cooperate with any local or public traffic information and/or route planning system, like TomTom^{™}, Google Maps^{™}, etc.

5. Telecommunication system according to claim 1, the assessment means being part of or arranged to cooperate with any local or public weather information system.

6. Telecommunication system according to claim 1, the assessment means comprising detection means which are arranged for detecting whether the second terminal's user is involved in driving any motor vehicle.

7. Telecommunication system according to claim 1 or 6, the assessment means being arranged for detecting whether the second terminal is or is not set to handsfree operation.

8. Telecommunication system according to claim 1, the assessment means being part of or arranged to cooperate with a control or management system of the relevant motor vehicle.

9. Telecommunication system according to claim 8, the assessment means being arranged to communicate with the motor vehicle's control or management system via any form of near field data transmission like RFID, Bluetooth etc.
